Europäisches Patentamt

European Patent Office

Office européen des brevets

(11) Veröffentlichungsnummer: **0 216 203**
**B1**

## EUROPÄISCHE PATENTSCHRIFT

(45) Veröffentlichungstag der Patentschrift:
25.04.90

(51) Int. Cl.⁴: **B65G 47/14**

(21) Anmeldenummer: 86112079.8

(22) Anmeldetag: 01.09.86

(54) **Einrichtung zum Speichern, Vereinzeln und Zuführen von als Schüttgut aufnehmbaren Teilen.**

(30) Priorität: 27.09.85 DE 3534592

(43) Veröffentlichungstag der Anmeldung:
01.04.87 Patentblatt 87/14

(45) Bekanntmachung des Hinweises auf die Patenterteilung:
25.04.90 Patentblatt 90/17

(84) Benannte Vertragsstaaten:
CH DE FR GB LI

(56) Entgegenhaltungen:
AT-B- 339 208
DE-A- 2 754 189
DE-B- 1 025 239

(73) Patentinhaber: Siemens Aktiengesellschaft,
Wittelsbacherplatz 2, D-8000 München 2(DE)

(72) Erfinder: Mehdianpour,Mohammad, Bahnhofstrasse 110,
D-8011 Baldham(DE)

**Beschreibung**

Die Erfindung betrifft eine Einrichtung zum Speichern, Vereinzeln und Zuführen von als Schüttgut aufnehmbaren Teilen, insbesondere von kubischen oder zylindrischen elektronischen Bauteilen, mit
- einem Vorratsbehälter zur Aufnahme des Schüttguts,
- einem sich an den Auslauf des Vorratsbehälters anschließenden Längsförderer und
- einer Maske, durch welche die Teile nacheinander und lagegerecht in Richtung einer Entnahmeposition des Längsförderers transportierbar sind.

Bei der automatischen Bestückung von Leiterplatten oder Keramiksubstraten mit elektronischen Bauteilen, wie Widerständen, Kondensatoren, Dioden, Transistoren, Chips und dergleichen werden aus stranggepreßten Profilen bestehende Förderschienen nebeneinander auf dem Rütteltisch eines Vibrationslängsförderers angeordnet. Die am hinteren Ende der Förderschienen in Vorratsbehältern als Schüttgut gespeicherten elektronischen Bauteile werden durch die Schwingbewegungen des Rütteltisches zum vorderen Ende der Förderschienen hin befördert, an welchem durch eine Abflachung bzw. Ausfräsung eine Entnahmeöffnung für die Bauteile gebildet ist. Die Entnahme der in diesen Entnahmepositionen bereitgestellten Bauteile erfolgt dann jeweils bei Stillstand des Rütteltisches über einen Bestückkopf, welcher das Bauteil mit einer Saugpipette erfaßt, mit Hilfe von Hebeln zentriert und auf einer vorbestimmten Stelle der Leiterplatte oder des Keramiksubstrats ablegt. Da von derartigen Bestückautomaten eine Bestückungssicherheit von 99,99 % gefordert wird, muß der auf die Entnahmepositionen der Vibrationslängsförderer programmierte Bestückkopf die Bauteile dort auch stets in der richtigen Lage antreffen. Für diese richtige Lage der Bauteile sorgen im Anfangsbereich der Förderbahn des Vibrationslängsförderers angeordnete Masken, die als Sperre für falsch liegende Bauteile wirken und die Bauteile nur einzeln durchlassen. Der Durchtrittsquerschnitt dieser Masken ist also derart auf die Form und Größe der Bauteile abgestimmt, daß diese nur in der richtigen Lage und nacheinander hindurchtreten und zur Entnahmeposition transportiert werden können.

Bei der vorstehend beschriebenen Einrichtung zum Speichern, Vereinzln und Zuführen von als Schüttgut aufnehmbaren elektronischen Bauteilen kann es in Förderrichtung gesehen vor der Maske zu einem Stau falsch liegender Bauteile kommen, wobei ein derartiger Stau bereits durch ein einziges Bauteil ausgelöst werden kann, welches den Durchtrittsquerschnitt der Maske blockiert. Wird der Stau dann nicht rechzeitig erkannt oder durch aufwendige Schikanen bzw. Abweiser von vorneherein verhindert, so stehen an der Entnahmeposition nach kurzer Zeit keine Bauteile mehr zur Verfügung und die automatische Bestückung der Leiterplatten oder Keramiksubstrate muß unterbrochen werden.

Der Erfindung liegt die Aufgabe zugrunde, eine Einrichtung zum Speichern, Vereinzeln und Zuführen von als Schüttgut aufnehmbaren Teilen zu schaffen, bei welcher mit geringem Aufwand ein sicherer Transport der vereinzelten und in der richtigen Lage ausgerichteten Teile zur Entnahmeposition gewährleistet ist.

Diese Aufgabe wird bei einer Einrichtung der eingangs genannten Art dadurch gelöst, daß in Förderrichtung gesehen unmittelbar vor der Maske mindestens eine Öffnung in die Förderbahn des Längsförderers eingebracht ist und daß in die Öffnung zur Beseitigung eines vor der Maske gebildeten Staus falsch liegender Teile ein Gas einleitbar ist.

Der Erfindung liegt die Erkenntnis zugrunde, daß vor der Maske gestaute bzw. falsch liegende Teile auf einfache Weise durch die Einleitung von Luft weggeblasen werden können und dann richtig liegende nachrückende Teile einzeln durch die Maske hindurchtreten können. Eine Blockade des Durchtrittsquerschnitts der Maske durch falsch liegende Teile kann somit sicher verhindert werden.

Ein Einsatz von Druckluft bei einer Einrichtung zum Speichern, Vereinzeln und Zuführen von als Schüttgut aufnehmbaren elektronischen Bauteilen ist bereits bekannt. Bei der bekannten Einrichtung wird die Druckluft jedoch als Fördermittel eingesetzt, durch welches in gewissen Abständen jeweils eine begrenzte Anzahl von Bauteilen der Maske zugeführt wird. Durch die dosierte Zuführung der Bauteile zur Förderschiene und durch den Einsatz von Schikanen bzw. Abweisern wird hier die Gefahr von Stauungen der Bauteile ausgeschlossen. Die dosierte Zuführung von Bauteilen und die Anordnung von Schikanen oder Abweisern ist jedoch mit einem erheblichen baulichen Aufwand verbunden. Außerdem ist auch nicht mit Sicherheit gewährleistet, daß der Förderschiene jeweils die erforderliche Anzahl von Bauelementen zugeführt wird.

Gemäß einer bevorzugten Ausgestaltung der Erfindung sind die gestauten, falsch liegenden Teile über eine sich an die Maske anschließende, gekrümmte Leiteinrichtung in den rückwärtigen Bereich der Förderbahn transportierbar.

Die derart zurückbeförderten Teile können sich dann erneut ordnen und bei einer Einnahme der richtigen Lage durch die Maske hindurchtreten.

Die in die Förderbahn eingebrachte Öffnung ist vorzugsweise taktweise mit Gas beaufschlagbar. Der Takt kann dann so eingestellt werden, daß eventuelle Stauungen stets rechtzeitig aufgelöst werden und ein ausreichender Transport der Teile zur Entnahmeposition gewährleistet ist. Eine Erkennung tatsächlich auftretender Stauungen ist somit nicht erforderlich.

Weiterhin ist es besonders vorteilhaft, wenn unterhalb der in die Förderbahn eingebrachten Öffnung eine mit dem Gas beaufschlagbare Düse angeordnet ist. Die Gaszufuhr muß dann nicht direkt an die Förderbahn angeschlossen werden. Insbesondere kann die Düse dann auch ortsfest angeordnet werden, so daß das Abheben der mit den zugeordneten Vorratsbehältern verbundenen Förderschienen vom Rütteltisch nicht durch die Leitungen für die Gaszufuhr beeinträchtigt wird.

Ein Ausführungsbeispiel der Erfindung ist in der Zeichnung dargestellt und wird im folgenden näher beschrieben.

Es zeigen

Figur 1 einen Längsschnitt durch den hinteren Endbereich eines Längsförderers einer Einrichtung zum Speichern, Vereinzeln und Zuführen von als Schüttgut aufnehmbaren elektronischen Bauteilen,

Figur 2 einen Querschnitt durch die Förderschiene des Längsförderers im Bereich hinter der Maske

Figur 3 einen Querschnitt durch die Förderschiene des Längsförderers im Bereich vor der Maske und

Figur 4 einen Querschnitt durch die Förderschiene im Bereich der Maske.

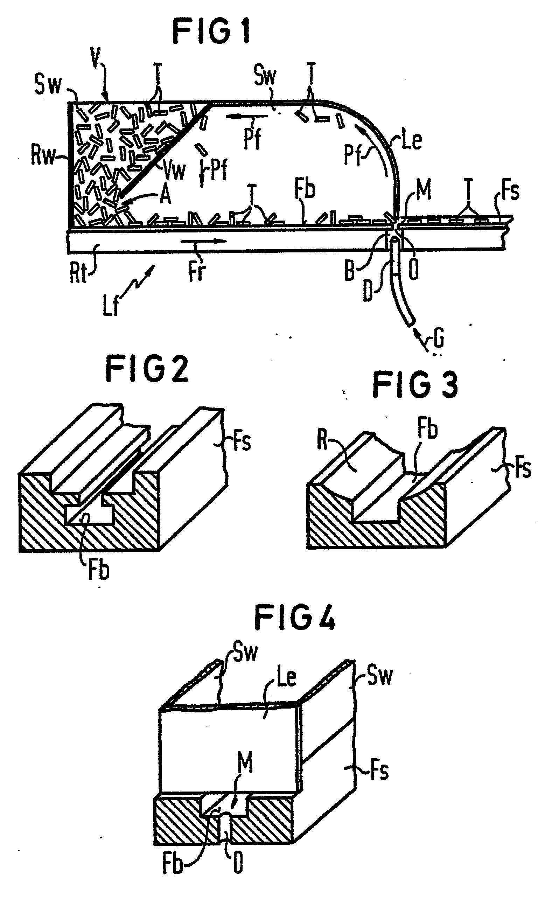

Figur 1 zeigt in stark vereinfachter schematischer Darstellung einen Längsschnitt durch den rückwärtigen Endbereich eines insgesamt mit Lf bezeichneten Längsförderers. Es ist ein Rütteltisch Rt zu erkennen, auf welchem eine Förderschiene Fs befestigt ist. Das hintere Ende der Förderschiene Fs trägt einen mit elektronischen Bauteilen T gefüllten Vorratsbehälter V, der durch eine vertikale Rückwand Rw, eine schräg geneigte Vorderwand Vw und zwei vertikale Seitenwände Sw gebildet ist und dessen Breite der Breite der Förderschiene Fs entspricht. Die schräg geneigte Vorderwand Vw reicht nicht bis zur Förderschiene Fs hinunter, so daß im unteren Bereich des Vorratsbehälters V ein Auslauf A für die Bauteile T gebildet ist, durch welchen die Bauteile T auf die Förderbahn Fb der Förderschiene Fs rutschen und dann in der durch einen Pfeil Fr aufgezeigten Förderrichtung zu einer Maske M hin transportiert werden. Bei dieser Maske M handelt es sich um eine Sperre, deren Durchtrittsquerschnitt so auf die Form und Größe der Bauteile T abgestimmt ist, daß diese nur in der richtigen Lage und nacheinander hindurchtreten können. Die durch die Maske M vereinzelten und lagegerecht orientierten Bauteile T werden dann zu einer am nicht dargestellten vorderen Ende der Förderschiene Fs gebildeten Entnahmeposition weiterbefördert und dort in der richtigen Lage vom Bestückkopf eines Bestückautomaten abgeholt.

Durch die vorstehend beschriebene Funktion der Maske M als Sperre für falsch, insbesondere quer oder hochkant auf der Förderbahn Fb liegende Bauteile T besteht die Gefahr, daß es vor der Maske M zu einem Stau falsch liegender Bauteile T kommt und die weitere Zufuhr von Bauteilen T zur Entnahmeposition unterbrochen wird. Um dieser Gefahr zu begegnen wird die Staustelle vor der Maske M in regelmäßigen Abständen freigeblasen. Hierzu ist unmittelbar vor der Maske M in die Förderbahn Fb eine Öffnung O eingebracht unterhalb der eine mit einem Gas G, insbesondere mit Druckluft, taktweise beaufschlagbare Düse D angeordnet ist. Diese Düse D ist am in der Zeichnung nicht dargestellten Sockel des Längsförderers Lf befestigt und in eine Bohrung B des Rütteltisches Rt eingeführt, deren Durchmesser auf die Schwingungsamplitude des Rütteltisches abgestimmt ist. Durch die taktweise in die Öffnung O von unten her eingeführte Druckluft werden die gestauten Teile T nach oben weggeblasen und durch eine nach rückwärts gekrümmte Leiteinrichtung Le in den rückwärtigen Bereich der Förderbahn Fb umgelenkt, so daß sie sich dort erneut ordnen können und die Chance haben die richtige Lage einzunehmen. Die Bahn der von der Staustelle weggeblasenen Teile ist in der Zeichnung durch Pfeile Pf aufgezeigt. Bei der Leiteinrichtung Le handelt es sich um ein gebogenes Leitblech welches sich unmittelbar an die Maske M anschließt und bis zum oberen Rand der Vorderwand Vw des Vorratsbehälters V reicht. Zur seitlichen Führung der weggeblasenen Teile T sind die beiden Seitenwände Sw des Vorratsbehälters V bis zur Leiteinrichtung Le hinaus verlängert, d. h. es entsteht ein geschlossener Behälter aus welchem die Teile T nicht austreten können.

Gemäß Figur 2 wird die Förderbahn Fb in dem hinter der Maske M liegenden Bereich der Förderschiene Fs durch eine T-förmige Nut gebildet, die eine sichere Führung der Teile T gewährleistet und insbesondere ein Aufstellen der Teile T verhindert. Die in Figur 2 dargestellte Querschnittsform dieser Nut ist auf kubische Teile T abgestimmt, während eine mehr quadratische oder runde Form für die zylindrische Teile T geeignet wäre.

Gemäß Figur 3 wird die Förderbahn Fb in dem vor der Maske M liegenden Bereich der Förderschiene Fs durch eine nach oben offene U-förmige Nut gebildet, die sich im Bodenbereich einer etwa viertelkreisförmig gewölbten Rinne R befindet. Durch eine derartige Ausgestaltung von Rinne R und U-förmiger Nut wird die richtige Lageorientierung der aus dem Auslauf A (vgl. Figur 1) austretenden Teile T und der von der Staustelle weggeblasenen Teile T in erheblichem Maße gefördert.

Figur 4 zeigt einen Querschnitt durch die Förderschiene Fs im Bereich der Öffnung O, d. h. unmittelbar vor der Maske M. Es ist zu erkennen, daß die Förderschiene Fs hier bis zur Oberkante der die Förderbahn Fb bildenden U-förmigen Nut flach abgefräst ist. Die Maske M ist als Durchtrittsquerschnitt für die Teile T anzusehen, der durch die U-förmige Nut und die Unterkante der Leiteinrichtung Le begrenzt wird. In dem Querschnitt der Figur 4 sind ferner die beiden bis zur Leiteinrichtung Le vorgezogenen Seitenwände Sw zu erkennen.

Die Förderschiene Fs wird auf dem Rütteltisch Rt eines Längsförderers Lf üblicher Bauart zweckmäßigerweise durch Magnetkraft gehalten, wodurch ein schnelles, müheloses und verschleißfreies Austauschen erreicht wird. Weitere Einzelheiten über eine derartige magnetische Halterung und über die Ausgestaltung eines Längsförderers gehen aus der DE-OS 31 24 846 hervor. Damit sich die Teile T im Bereich der Entnahmeposition mit Sicherheit nicht aufstellen können kann dort eine bewegliche Abdeckung angebracht werden, welche die Entnahmeöffnung während des Betriebes des Rütteltisches Rt verschließt und beim Stillstand des Rütteltisches Rt geöffnet wird. Nähere Einzelheiten hierzu gehen aus der DE-OS 33 05 738 hervor.

**Patentansprüche**

1. Einrichtung zum Speichern, Vereinzeln und Zuführen von als Schüttgut aufnehmbaren Teilen, insbesondere von kubischen oder zylindrischen elektronischen Bauteilen, mit
- einem Vorratsbehälter zur Aufnahme des Schüttguts,
- einem sich an den Auslauf des Vorratsbehälters anschließenden Längsförderer und
- einer Maske, durch welche die Teile nacheinander und lagegerecht in Richtung einer Entnahmeposition des Längsförderers transportierbar sind,
dadurch **gekennzeichnet**, daß in Förderrichtung (Fr) gesehen unmittelbar vor der Maske (M) mindestens eine Öffnung (O) in die Förderbahn (Fb) des Längsförderers (Lf) eingebracht ist und daß in die Öffnung (O) zur Beseitigung eines vor der Maske (M) gebildeten Staus falsch liegender Teile (T) ein Gas (G) einleitbar ist.

2. Einrichtung nach Anspruch 1, dadurch **gekennzeichnet**, daß die gestauten, falsch liegenden Teile (T) über eine sich an die Maske (M) anschließende, gekrümmte Leiteinrichtung (Le) in den rückwärtigen Bereich der Förderbahn (Fb) transportierbar sind.

3. Einrichtung nach Anspruch 1 oder 2, dadurch **gekennzeichnet**, daß die Öffnung (O) in der Förderbahn (Fb) taktweise mit Gas (G) beaufschlagbar ist.

4. Einrichtung nach einem der vorhergehenden Ansprüche, dadurch **gekennzeichnet**, daß unterhalb der Öffnung (O) in der Förderbahn (Fb) eine mit dem Gas (G) beaufschlagbare Düse (D) angeordnet ist.

5. Einrichtung nach Anspruch 4, dadurch **gekennzeichnet**, daß die Düse (D) ortsfest angeordnet ist.

## Claims

1. Device for storing, separating and feeding articles stored in bulk, in particular cubical or cylindrical electronic components, having
– a storage container to receive the bulk material,
– a longitudinal conveyor adjoining the outlet of the storage container and
– a mask, through which the articles can be transported, successively and in the correct position, in the direction of a removal of the longitudinal conveyor,
characterized in that, seen in the direction of conveying (Fr), immediately before the mask (M) at least one opening (O) is introduced in the conveying path (Fb) of the longitudinal conveyor (Lf), and in that a gas (G) can be conducted into the opening (O) to remove a congestion of articles (T) lying in the wrong position before the mask (M).

2. Device according to Claim 1, characterized in that the congested articles (T) lying in the wrong position can be transported via a curved conduction device (Le), adjoining the mask (M), into the rear area of the conveying path (Fb).

3. Device according to Claim 1 or 2, characterized in that the opening (O) in the conveying path (Fb) can be charged with gas (G) in a timed cycle.

4. Device according to the preceding claims, characterized in that a nozzle (D), which can be charged with the gas (G), is arranged below the opening (O) in the conveying path (Fb).

5. Device according to Claim 4, characterized in that the nozzle (D) is arranged in a stationary manner.

## Revendications

1. Dispositif pour emmagasiner, pour individualiser et pour acheminer des pièces susceptibles d'être reçues sous la forme d'un tas de produits en vrac, notamment des composants électroniques cubiques ou cylindriques, comprenant
– un réservoir de réception du tas en vrac,
– un convoyeur longitudinal se raccordant à la sortie du réservoir et
– un gabarit à travers lequel les pièces peuvent être transportées par le convoyeur longitudinal, l'une après l'autre et en position correcte en direction d'une position de prélèvement,
caractérisé en ce que, immédiatement en amont du gabarit (M), considéré dans le sens du convoyeur (Fr), il est prévu au moins une ouverture (O) ménagée dans la voie de transport (Fb) du convoyeur longitudinal (Lf) et en ce qu'un gaz (G) peut être envoyé dans l'ouverture (O) pour supprimer devant le gabarit (M) une accumulation de pièces se présentant en position incorrecte.

2. Dispositif suivant la revendication 1, caractérisé en ce que les pièces (T) accumulées et se présentant en position incorrecte peuvent être transportées dans la partie arrière de la voie de transport (Fb), par un dispositif de guidage (Le) incurvé et se raccordant au gabarit (M).

3. Dispositif suivant la revendication 1 ou 2, caractérisé en ce que l'ouverture (O) de la voie de transport (Fb) peut périodiquement être alimentée en gaz (G).

4. Dispositif suivant l'une des revendications précédentes, caractérisé en ce qu'en-dessous de l'ouverture (O) de la voie de transport (Fb), est montée une buse (D) qui peut être alimentée en gaz (G).

5. Dispositif suivant la revendication 4, caractérisé en ce que la buse (D) est montée à poste fixe.

# FIG 1

# FIG 2

# FIG 3

# FIG 4